# EUROPEAN PATENT APPLICATION

(11) **EP 2 003 725 A2**
(43) Date of publication of application: **17.12.2008**
(21) Application number: 08010825.1
(22) Date of filing: 13.06.2008
(51) Int. Cl.: H01M 16/00, H01M 10/44, H01M 8/04

(54) **Fuel cell system**

(30) Priority: 15.06.2007 JP 2007158895
(71) Applicant: Yamaha Hatsudoki Kabushiki Kaisha, Iwata-shi, Shizuoka-ken 438-8501 (JP)
(72) Inventor: Kobayashi, Kenji, Iwata-shi Shizuoka-ken 4388501 (JP)
(74) Representative: Grünecker, Kinkeldey, Stockmair & Schwanhäusser Anwaltssozietät

(57) **Abstract**

The present invention relates to a fuel cell system, comprising: a fuel cell device; a secondary battery chargeable by the fuel cell device; a cooling system including a water pump arranged to circulate cooling water for cooling the fuel cell device via a circulation pipeline; and pump operation control means configured to operate the water pump to circulate the cooling water via the circulation pipeline during a time period when the fuel cell device is not operated.

## Description

The present invention relates to a fuel cell system and, in particular, a fuel cell vehicle constituted to run by rotationally driving a wheel by an electric motor supplied with electricity at least by either one of a secondary battery and a fuel cell device.

The fuel cell system and the fuel cell vehicle of this type is constituted to keep a fuel cell at a predetermined temperature by circulating highly pure cooling water via a circulation pipeline by a water pump while the fuel cell is generating electricity. For example, in JP-A-2005-235489 an ion removing filter is interposed in the circulation pipeline to remove electroconductive ions solved in the cooling water.

On the other hand, a secondary battery chargeable by an external power source is mounted on a recent fuel cell vehicle to reduce consumption of hydrogen gas fuel as much as possible. The secondary battery is mainly used as a power source during normal running, and a fuel cell device is operated in accordance with a state of discharge of the secondary battery or with a running condition of the vehicle.

When the conventional fuel cell vehicle is constituted to run with the secondary battery chargeable by an external power source as a main power source, there are frequent cases in which the vehicle does not use the fuel cell device very often during running. If such cases are repeated during running, the cooling water for cooling the fuel cell is not circulated adequately. Accordingly, the cooling water may be deteriorated and corroded at an early stage, and the cooling water may be frozen while being left outside for a long time in a cold region.

An objective of the present invention, which was made in view of such situation described above, is to provide a fuel cell system which prevents the cooling water for cooling a fuel cell from being corroded or frozen when a secondary battery and the fuel cell are used together.

According to the present invention, said objective is solved by a fuel cell system, comprising a fuel cell device; a secondary battery chargeable by the fuel cell device; a cooling system including a water pump arranged to circulate cooling water for cooling the fuel cell device via a circulation pipeline; and pump operation control means configured to operate the water pump to circulate the cooling water via the circulation pipeline during a time period when the fuel cell device is not operated.

Preferably, the pump operation control means is further configured to operate the water pump to circulate the cooling water via the circulation pipeline during a time period when the fuel cell device is not operated and when an external power source is connected to the secondary battery in order to charge said secondary battery.

Further, preferably the pump operation control means is configured to operate the water pump by electric power from the external power source during the aforesaid time period.

Still further, preferably the pump operation control means is configured to stop operation of the water pump when the connection of the external power source to the secondary battery is disabled.

Yet further still, preferably during the aforesaid time period the pump operation control means is configured to operate the water pump with an output lower than that during operation of the fuel cell device.

Preferably, a conductivity decrease means configured to decrease conductivity of the cooling water flowing through the circulation pipeline is comprised.

According to a preferred embodiment, a power source control means is configured to supply electric power to the secondary battery from the external power source during the aforesaid time period are provided, and, preferably, the power source control means is configured to stop supplying electric power to the secondary battery from the external power source when an amount of a battery charge of the secondary battery exceeds a specified value during the aforesaid time period.

Preferably, the power source control means is configured to supply electric power to the secondary battery and the conductivity decrease means from the external power source during the aforesaid time period, and, preferably, the power source control means is configured to stop supplying electric power to the secondary battery from the external power source when an amount of a battery charge of the secondary battery exceeds a specified value during the aforesaid time period.

Further, preferably the power source control means is configured to stop supplying electric power to the secondary battery and the conductivity decrease means from the external power source when the connection of the external power source to the secondary battery is disabled.

Still further, preferably the conductivity decrease means includes an electric ion removing device, and, preferably, a power source control means is configured to supply electric power to the secondary battery and the electric ion removing device from the external power source during the aforesaid time period.

Yet further still, preferably the conductivity decrease means includes an ion exchange resin type ion removing device interposed in a bypass pipeline bypassing the circulation pipeline and switch means configured to permit or restrict a flow of the cooling water to the bypass pipeline, and, preferably, a power source control means is configured to supply electric power to the secondary battery and the switch means from the external power source during the aforesaid time period.

Preferably, the switch means includes an electromotive three-way valve.

Further, preferably the switch means is a three-way valve of an automatic temperature sensing type containing shape memory alloy and is configured to switch a route of the cooling water from the circulation pipeline to the bypass pipeline or from the bypass pipeline to the circulation pipeline when a temperature of the cooling water reaches a specified temperature.

According to another preferred embodiment, there is provided transportation equipment, in particular a vehicle, comprising a fuel cell system according to the above embodiments.

Preferably, an electric motor is comprised, and at least either one of the secondary battery and the fuel cell device is configured to supply the electric motor with electricity in order to drive at least one wheel of the transportation equipment.

In the following, the present invention is explained in greater detail by means of embodiments thereof in conjunction with the accompanying drawings, wherein:
- FIG. 1: is a system configuration diagram of a fuel cell vehicle according to a first embodiment;
- FIG. 2: is a flow chart illustrating an operation of the fuel cell vehicle;
- FIG. 3: is a system configuration diagram of the fuel cell vehicle according to a second embodiment;
- FIG. 4: is a flow chart illustrating an operation of the fuel cell vehicle; and
- FIG. 5: is a flow chart illustrating an operation in a case in which a three-way valve of an automatic temperature sensing type is adopted according to a modified example of the second embodiment.

Among others, the following reference signs are used in the figures:
1: fuel cell vehicle
2: secondary battery
3: fuel cell device
4: wheel
5: electric motor
14: distributor
15: fuel cell cooling device (cooling system)
16: circulation pipeline
17: water pump
20: electric ion removing device (conductivity decrease means)
22: controller (pump operation control means, power source control means)
30: bypass pipeline
31: ion exchange resin type ion removing device (conductivity decrease means)
32: electromotive three-way valve
A: external power source
a: battery charge power source
b: pump operation power source
c: device operation power source
d: switching power source

Embodiments will be described hereinafter with reference to accompanying drawings. The embodiments are cases in which a fuel cell system 100 is provided in a vehicle.

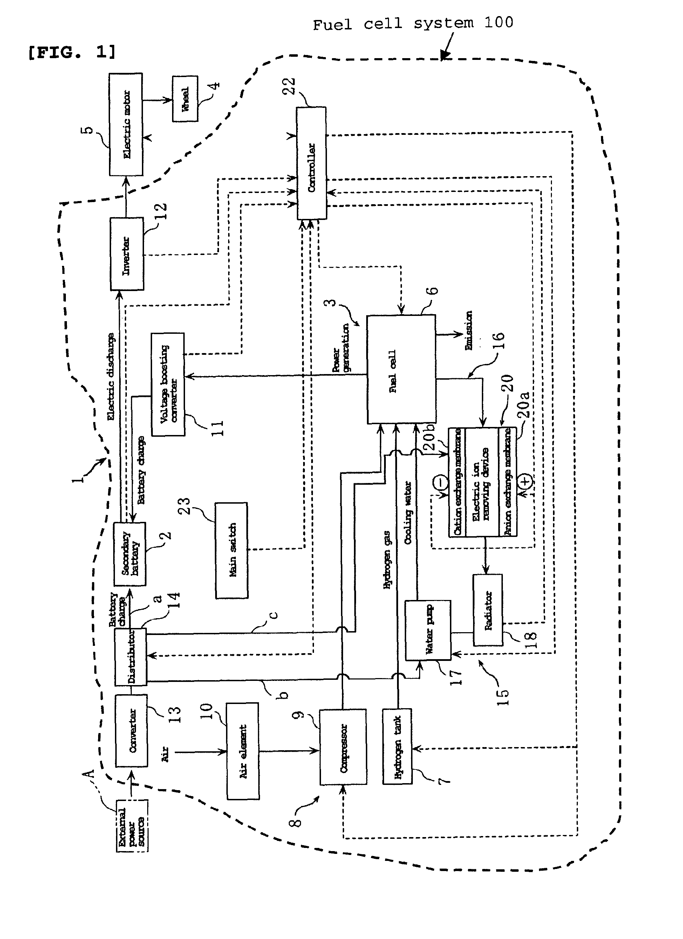

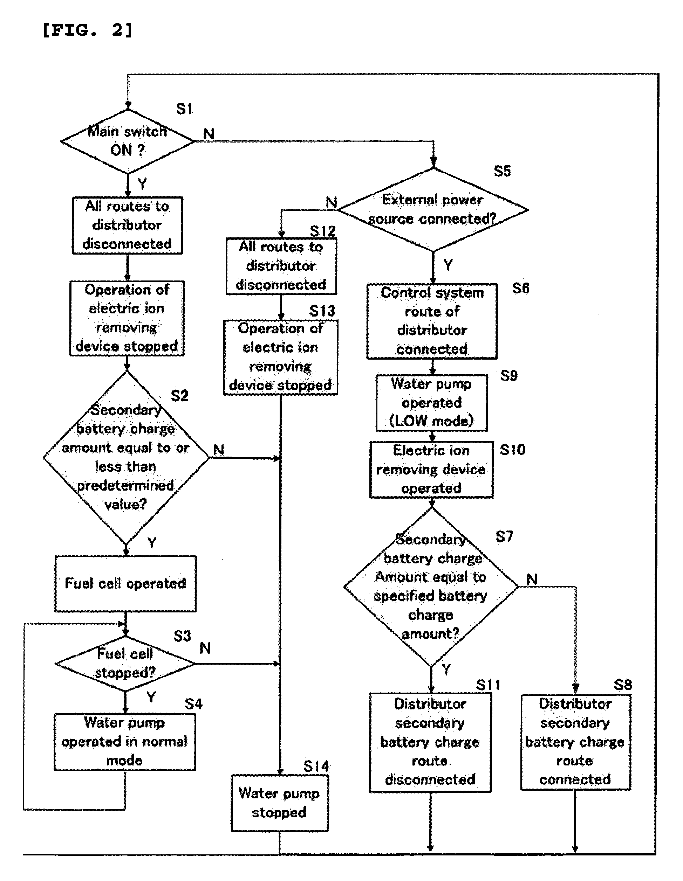

FIG. 1 and FIG. 2 are drawings for describing a fuel cell vehicle according to a first embodiment. FIG. 1 is a block diagram of the fuel cell vehicle, and FIG. 2 is a flow chart for describing an operation of the fuel cell vehicle.

In the drawings reference numeral 1 denotes a system configuration of the fuel cell vehicle including, a secondary battery 2 mounted on the vehicle (not shown), a fuel cell device 3, and an electric motor 5 supplied with electricity at least by either one of the secondary battery 2 and the fuel cell device 3 to rotatably drive a wheel 4.

The fuel cell device 3 has a fuel cell 6, a hydrogen tank 7 for supplying hydrogen gas to the fuel cell 6, and an air supply section 8 for supplying compressed air to the fuel cell 6. The air supply section 8 has a compressor 9 for compressing air and an air element 10 for filtering air to the compressor 9.

The fuel cell 6 causes an electrochemical reaction of the hydrogen gas supplied from the hydrogen tank 7 with the compressed air supplied from the compressor 9 and converts chemical energy into electric energy to generate electricity. The generated electric power is supplied to the secondary battery 2 via a voltage boosting converter 11 for boosting a voltage from the fuel cell 6 to a voltage for the secondary battery and charges the secondary battery 2.

The fuel cell vehicle 1 is provided with a fuel cell cooling device 15 for cooling the fuel cell 6 during power generation to keep the fuel cell 6 at a predetermined temperature (for example 60 to 80°C).

The fuel cell cooling device 15 has a circulation pipeline 16 for circulating cooling water for cooling the fuel cell 6 between the fuel cell 6 and a radiator 18, a water pump 17 interposed in a middle of the circulation pipeline 16 for supplying the cooling water to the fuel cell 6, and the radiator 18 interposed on an upstream side of the water pump 17 of in the circulation pipeline 16 for cooling the cooling water having passed through the fuel cell 6. In this case the fuel cell cooling device 15 functions as the cooling system.

Further, an electric ion removing device 20 which functions as conductivity decrease means for decreasing conductivity of the cooling water flowing in the circulation pipeline 16 is interposed between the fuel cell 6 and the radiator 18 of the circulation pipeline 16. The electric ion removing device 20 removes electroconductive ions in the cooling water by an anion exchange membrane 20a and a cation exchange membrane 20b.

A converter 13 is connected to the secondary battery 2 via a distributor 14. The converter 13 converts an alternating current from an external power source "A" into a direct current and, in addition to this, converts external voltage from the external power source "A" into a voltage for the secondary battery. The secondary battery 2 is charged by connecting the converter 13, for example, to an outlet as an external power source for household appliances. The secondary battery 2 supplies electric power to the electric motor 5 via an inverter 12 which converts a direct current into an alternating current.

The distributor 14 connects or disconnects the external power source "A" to or from the secondary battery 2, the water pump 17, and the electric ion removing device 20 respectively.

The fuel cell vehicle 1 is provided with a controller 22 which operates and controls the electric motor 5, the fuel cell device 3, and the electric ion removing device 20 on the basis of an operating state of the vehicle 1.

When a main switch 23 is turned on, the controller 22 rotatably drives the wheel 4 by the electric motor 5 mainly with the secondary battery 2 as a power source "A" according to an amount of an operation of an accelerator by a rider.

When the amount of the battery charge of the secondary battery 2 becomes equal to or lower than a predetermined value during running, the controller 22 operates the fuel cell device 3. The secondary battery 2 is charged by electricity generated by the fuel cell device 3. When the amount of the battery charge of the secondary battery 2 exceeds the predetermined value, the fuel cell device 3 is stopped.

When the fuel cell device 3 starts an operation, the controller 22 also operates the water pump 17. The cooling water is circulated by the water pump 17 through the circulation pipeline 16. As a result, the fuel cell 6 is cooled and kept at a predetermined temperature.

Further, when conductivity of the cooling water exceeds a predetermined value while the fuel cell device 3 is operating, the controller 22 operates the electric ion removing device 20. As a result, electroconductive ions in the cooling water are removed.

The controller 22 supplies a battery charge power source "a", a pump operation power source "b", and an device operation power source "c" to the secondary battery 2, to the water pump 17, and to the electric ion removing device 20 respectively via the distributor 14 from the external power source "A". In this case the controller 22 and distributor 14 function as power source control means.

The controller 22 operates the water pump 17 to circulate the cooling water via the circulation pipeline 16 when the fuel cell device 3 is not operated and when the external power source "A" is connected to the secondary battery 2 for battery charge. In this case the controller 22 and distributor 14 function as pump operation control means. Specifically, while the main switch 23 is off, if the external power source "A" is connected to the secondary battery 2, then the water pump 17 is operated, and the electric ion removing device 20 is operated.

When the amount of the battery charge of the secondary battery 2 exceeds the predetermined value and, thus, the battery charge is ended, the controller 22 stops supplying the battery charge power source "a" to the secondary battery 2 via the distributor 14 and continues supplying the pump operation power source "b" to the water pump 17 and the device operation power source "c" to the electric ion removing device 20.

The controller 22 operates the water pump 17 with an output lower than that for a normal operation during the battery charge. Specifically, the amount of electricity supplied to the water pump 17 is controlled so that an amount of discharge of the cooling water is less than that during an operation of the fuel cell device 3.

When connection of the external power source "A" to the secondary battery 2 is disabled, the controller 22 stops operating the electric ion removing device 20 and also stops operating the water pump 17.

An operation of the controller 22 will be described hereinafter with reference to the flow chart in FIG. 2.

In step S1, when the main switch 23 is turned on, the amount of the battery charge of the secondary battery 2 is read (step S2). If the amount of the battery charge is equal to or lower than the predetermined value, the fuel cell device 3 is operated, and the water pump 17 is operated in a normal output mode (steps S3 and S4). As a result, the fuel cell 6 is cooled by the cooling water and generates electricity, charging the secondary battery 2.

In step S1, when the main switch 23 is off, if the external power source "A" is connected to the secondary battery 2 (step S5), a control system route of the distributor 14 is connected (step S6), and the battery charge power source "a" is supplied to the secondary battery 2. Then, the pump operation power source "b" is supplied to the water pump 17 via distributor 14, the device operation power source "c" is supplied to the electric ion removing device 20, the water pump 17 is operated in a LOW mode, and the electric ion removing device 20 is operated (steps S6, S9, and S10). Accordingly, the battery charge is continued until the amount of the battery charge of the secondary battery 2 reaches the specified value (steps S7 to S8).

In step S7, when the amount of the battery charge of the secondary battery 2 reaches the predetermined value, the supply of the battery charge power source "a" to the secondary battery 2 is stopped by the distributor 14 (step S11). In this case, the pump operation power source "b" to the water pump 17 and the device operation power source "c" to the electric ion removing device 20 are continued.

In step S5, when connection of the external power source "A" to the secondary battery 2 is disabled, the device operation power source "c" to the electric ion removing device 20 is stopped via the distributor 14, and the pump operation power source "b" to the water pump 17 is stopped (steps S12 to S14). Further, even if the external power source "A" is connected to the secondary battery 2, when the main switch 23 is turned on, the device operation power source "c" to the electric ion removing device 20 and the pump operation power source "b" to the water pump 17 are stopped.

According to the embodiment described above, while the main switch 23 is off, and therefore when the fuel cell device 3 is not operated, if the external power source "A" is connected to the secondary battery 2, the water pump 17 is operated to circulate the cooling water via the circulation pipeline 16. Accordingly, it is possible to prevent the cooling water from being corroded due to the stagnant cooling water and to prevent the cooling water from being frozen in a cold region. As a result, even if there are frequent cases in which the secondary battery 2 is mainly used as a power source "A" and the fuel cell device 3 is not used very much during running, it is possible to prevent the cooling water from being deteriorated at an early stage, and it is also possible to prevent the fuel cell device 3 from being damaged due to freeze of the cooling water. In addition, consumption of the hydrogen gas can be reduced.

Further, the water pump 17 is operated, and the electric ion removing device 20 is also operated. Accordingly, it is possible to prevent the cooling water from being deteriorated, and it is also possible to remove electroconductive ions at the same time.

According to the embodiment, the water pump 17 is automatically operated only by connecting the external power source "A" to the secondary battery 2. Accordingly, any special operation by man for circulating the cooling water is not necessary.

According to the embodiment, when connection of the external power source "A" to the secondary battery 2 is disabled, the operation of the water pump 17 is stopped. Accordingly, any special operation by man for stopping the water pump 17 is not necessary.

According to the embodiment, the water pump 17 is operated with the output lower than that for a normal operation. Accordingly, the output lower than that for cooling the fuel cell 6, in other words, an output of minimum requirement for circulating the cooling water is only necessary. As a result, power consumption can be reduced.

According to the embodiment, the electric ion removing device 20 which decreases conductivity of the cooling water flowing in the circulation pipeline 16 is interposed in the circulation pipeline 16. Accordingly, an operation for removing conductive ions from the cooling water can be performed at the same time when the cooling water is circulated. As a result, any special operation for decreasing conductivity of the cooling water is not necessary.

According to the embodiment, the battery charge power source "a", the pump operation power source "b", and the device operation power source "c" are separately supplied to the secondary battery 2, to the water pump 17, and to the electric ion removing device 20 respectively via the distributor 14 from the external power source "A". Accordingly, when the amount of the battery charge of the secondary battery 2 exceeds the specified value and the battery charge is ended, only the supply of the battery charge power source "a" to the secondary battery 2 is ended, and the power sources "b" and "c" to the water pump 17 and the electric ion removing device 20 can be continued. As a result, circulation of the cooling water and the operation for removing ions can be continued.

Further, the power sources "b" and "c" for operating the water pump 17 and the electric ion removing device 20 respectively are supplied from the external power source "A". Accordingly, it is possible to avoid a case in which the amount of the battery charge of the secondary battery 2 is uselessly reduced as a case in which the secondary battery 2 is a power source.

In the embodiment, when the battery charge of the secondary battery 2 is ended, only the supply of the battery charge power source "a" to the secondary battery 2 is ended. However, in the embodiment, when the battery charge power source "a" to the secondary battery 2 is stopped, the device operation power source "c" to the electric ion removing device 20 may be stopped at the same time. In this case, only the operation of the water pump is continued. Consequently, it is possible to avoid a problem in which the electric power of the secondary battery 2 is uselessly reduced as a case in which the secondary battery 2 is a power source. In addition, the amount of power consumption of the external power source "A" can be reduced.

Further, in the embodiment, when the external power source is connected to the secondary battery, the ion removing device is operated with the water pump. However, in the embodiment, only the water pump may be operated without operating the ion removing device. In this case, as the cooling water is circulated, it is possible to prevent the cooling water from being corroded or from being frozen in a cold region.

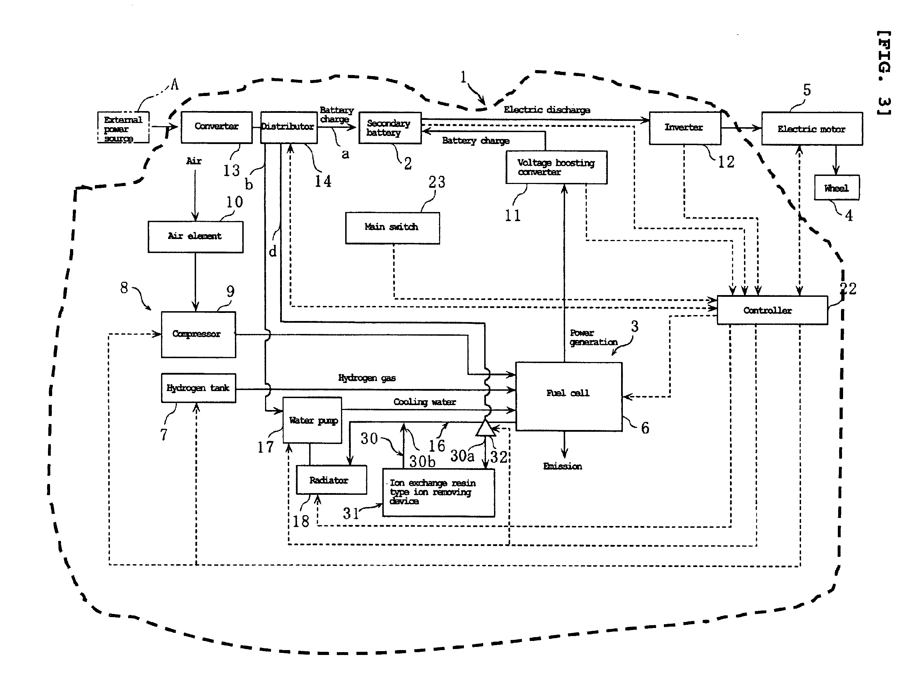

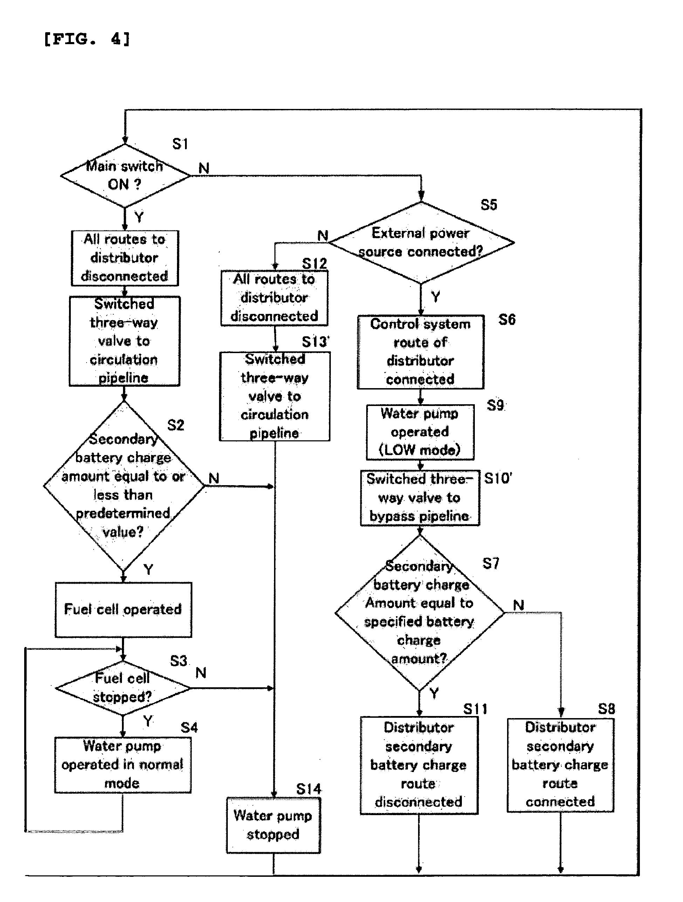

FIG. 3 and FIG. 4 are drawings for describing the fuel cell vehicle according to a second embodiment. In the drawings, the parts indicated with the same reference numerals and symbols as those in FIG. 1 and FIG. 2 are the same as or similar to corresponding parts.

A fuel cell vehicle 1 in the embodiment is provided with a secondary battery 2 mounted on a vehicle (not shown), fuel cell device 3, and an electric motor 5 supplied with electricity at least by either one of the secondary battery 2 and the fuel cell device 3 to rotatably drive the wheel 4. In addition, as a basic structure is generally the same as that in the first embodiment, different parts will be described.

The fuel cell vehicle 1 in the embodiment has a bypass pipeline 30 connected between the fuel cell device 3 and the radiator 18 of the circulation pipeline 16, bypassing the circulation pipeline 16, an ion exchange resin type ion removing device 31 interposed in the bypass pipeline 30, and an electromotive three-way valve 32 for permitting or restricting a flow of the cooling water to the bypass pipeline 30. In this case the bypass pipeline 30 and the ion exchange resin type ion removing device 31 and the electromotive three-way valve 32 function as conductivity decrease means. Also, the electromotive three-way valve 32 functions as switch means.

The electromotive three-way valve 32 is interposed in a connecting section between an upstream end 30a of the bypass pipeline 30 and the circulation pipeline 16. The electromotive three-way valve 32 is switched to either a bypass position which leads the cooling water discharged from the fuel cell device 3 to a side of the bypass pipeline 30 or a circulation position which circulates the discharged cooling water from the circulation pipeline 16 to a side of the radiator 18. The electromotive three-way valve may be interposed in a connecting section between a downstream end 30b of the bypass pipeline 30 and the circulation pipeline 16.

The controller 22 separately supplies the battery charge power source "a", the operation power source "b", and a switching power source "d" to the secondary battery 2, to the water pump 17, and to the electromotive three-way valve 32 respectively via the distributor 14 from the external power source "A". When the amount of the battery charge of the secondary battery 2 exceeds a specified value, the supply of the battery charge power source "a" to the secondary battery 2 is stopped via the distributor 14.

As illustrated in the flow chart in FIG. 4, while the main switch 23 is off, if the external power source "A" is connected to the secondary battery 2, a control system route of the distributor 14 is connected. Consequently, the battery charge power source "a" is supplied to the secondary battery 2, and the switching power source "d" is supplied to the electromotive three-way valve 32. Moreover, the pump operation power source "b" is supplied to the water pump 17 (steps S5 and S6). As a result, the battery charge is continued until the amount of the battery charge of the secondary battery 2 reaches the specified value (steps S7 to S8). At the same time with this, the electromotive three-way valve 32 is switched to the side of the bypass pipeline 30, and the water pump 17 is operated in the LOW mode. The cooling water discharged from the fuel cell device 3 flows through the side of the bypass pipeline 30 and, after electroconductive ions are removed by the ion removing device 31, the cooling water is returned to the circulation pipeline 16, being circulated by the route passing through the radiator 18 (steps S9 and S10').

In step S7, when the amount of the battery charge of the secondary battery 2 reaches the predetermined value, the supply of the battery charge power source "a" to the secondary battery 2 is stopped by the distributor 14 (step S11). In this case, the pump operation power source "b" to the water pump 17 and the switching power source "d" to the electromotive three-way valve 32 are continued.

In step S5, when connection of the external power source "A" to the secondary battery 2 is disabled, all routes to the distributor 14 are disconnected. Consequently, the supply of the switching power source "d" to the electromotive three-way valve 32 is stopped, and the pump operation power source "b" to the water pump 17 is stopped (steps S12, S13', S14). As a result, the flow of the cooling water of fuel cell device 3 is stopped.

According to the embodiment, the ion exchange resin type ion removing device 31 and the electromotive three-way valve 32 are interposed in the bypass pipeline 30 bypassing the circulation pipeline 16, and the battery charge power source "a", the operation power source "b", and the switching power source "d" are supplied to the secondary battery 2, to the water pump 17, and to the electromotive three-way valve 32 respectively via the distributor 14 from the external power source "A". When the amount of the battery charge of the secondary battery 2 exceeds the specified value, the supply of the battery charge power source "a" to the secondary battery 2 is stopped. Accordingly, even when the battery charge of the secondary battery 2 is ended, the power source "d" for operating the electromotive three-way valve 32 can be supplied from the external power source "A". As a result, it is possible to avoid a case in which the amount of the battery charge of the secondary battery is uselessly reduced as a case in which the secondary battery 2 is a power source.

In the second embodiment, a case in which the flow of the cooling water to the bypass pipeline is permitted or restricted by the electromotive three-way valve is described. However, in the embodiment, a three-way valve of an automatic temperature sensing type may be adopted. When the three-way valve of an automatic temperature sensing type is adopted, the power source for operating the switch means is not necessary.

The three-way valve of an automatic temperature sensing type contains shape memory alloy. When the temperature of the cooling water reaches a specified temperature, the route of the cooling water is switched from the circulation pipeline 16 to the bypass pipeline 30 or from the bypass pipeline 30 to the circulation pipeline 16.

For example, when the specified temperature of the shape memory alloy is 50°C, if the cooling water reaches 50°C as a result of an operation of the fuel cell device, the route of the flow is automatically switched to the side of the circulation pipeline. When the fuel cell device is operated, the temperature of the cooling water is raised up to about 60°C in a short time.

When the temperature of the cooling water is 50°C or higher, the cooling water does not flow to the side of the ion removing device 31, which resists the flow. Accordingly, the fuel cell device 3 is efficiently cooled, and it is possible to avoid a problem in which the ion removing device 31 is damaged because of the temperature rise of the cooling water.

On the other hand, if the temperature of the cooling water is lower than 50°C, the route of the cooling water is automatically switched to the side of the bypass pipeline 30. Consequently, the cooling water flows from the bypass pipeline 30 to the ion removing device 31.

When the vehicle is stopped or parked, the fuel cell device 3 is not operated. Accordingly, the temperature of the cooling water becomes as low as an outside air temperature. Consequently, the cooling water passes through the ion removing device 31, and ions are removed.

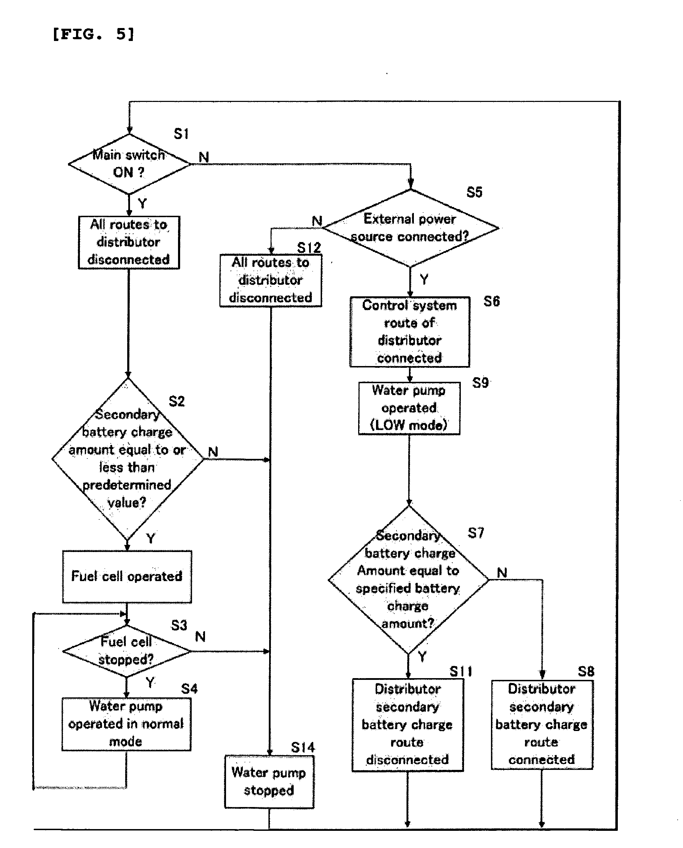

FIG. 5 is a flow chart illustrating an operation in a case in which the three-way valve of an automatic temperature sensing type is adopted in place of the electromotive three-way valve. In the drawing, the parts indicated with the same reference numerals and symbols as those in FIG. 4 are the same as or similar to corresponding parts.

While the main switch is off, if the external power source "A" is connected to the secondary battery 2, the battery charge power source "a" is supplied to the secondary battery 2 via the distributor 14. At the same time with this, the pump operation power source "b" is supplied to the water pump 17 via distributor 14. On the other hand, when connection of the external power source "A" to the secondary battery 2 is disabled, the supply of the pump operation power source "b" to the water pump 17 is stopped via the distributor 14.

The description above discloses (among others) an embodiment of a fuel cell system, comprising: a fuel cell device; a secondary battery chargeable by the fuel cell device; a cooling system including a water pump arranged to circulate cooling water for cooling the fuel cell device via a circulation pipeline; and pump operation control means for operating the water pump to circulate the cooling water via a circulation pipeline during a term when the fuel cell device is not operated and an external power source enabling a battery charge of the secondary battery is connected to the secondary battery.

Accordingly, during a term when the fuel cell device is not operated and when the external power source is connected to the secondary battery, the water pump is operated to circulate the cooling water (an operation power source is supplied to the water pump). Accordingly, it is possible to prevent the cooling water from being corroded due to the stagnant cooling water and to prevent the cooling water from being frozen in a cold region. As a result, for example, even if there are frequent cases in which the secondary battery is mainly used as a power source and the fuel cell device is not used very often during running, it is possible to prevent the cooling water from being deteriorated at an early stage, and it is also possible to prevent the fuel cell device from being damaged due to freeze of the cooling water.

Further, when the external power source is connected to the secondary battery, the water pump is automatically operated. Accordingly, any special operation by man for circulating the cooling water is not necessary.

Preferably, the pump operation control means arranged to operate the water pump by electric power from the power source during the term.

Accordingly, the power source for operating the water pump is supplied from the external power source accordingly, it is possible to avoid a problem in which the electric power of the secondary battery is uselessly reduced as a case in which the water pump is operated with the secondary battery as a power source.
Preferably, the pump operation control means stops an operation of the water pump when connection of the external power source to the secondary battery is disabled.

Accordingly, when connection of the external power source to the secondary battery is disabled, an operation of the water pump is stopped. Accordingly, any special operation by man for stopping the water pump is not necessary.

Preferably, the pump operation control means operates the water pump with an output lower than that for a normal operation during the term.

Accordingly, the water pump is operated by an output lower than that for a normal operation during the term. Accordingly, an output lower than that for cooling the fuel cell device or, in other words, an output of minimum requirement for circulating the cooling water is only necessary. As a result, power consumption can be reduced.

Preferably, the fuel cell system further comprises: conductivity decrease means for decreasing conductivity of the cooling water flowing through the circulation pipeline.

Accordingly, conductivity of the cooling water flowing the circulation pipeline is decreased. Accordingly, an operation for decreasing conductivity of the cooling water can be performed at the same time when the cooling water is circulated. As a result, any special operation for decreasing conductivity of the cooling water is not necessary.

Preferably, the fuel cell system further comprises: a power source control means for supplying electric power to the secondary battery from the external power source during the term, wherein the power source control means stops supplying electric power to the secondary battery from the external power source when an amount of a battery charge of the secondary battery exceeds a specified value and during the term.

Accordingly, the battery charge power source and the operation power source are supplied to the secondary battery and to the water pump respectively via the distributor from the external power source and when an amount of the battery charge of the secondary battery exceeds the specified value, supply of the battery charge power source to the secondary battery is stopped. Accordingly, even when the battery charge of the secondary battery is ended, the operation power source is kept supplied to the water pump. Consequently, the cooling water can be kept circulated until connection of the external power source is disabled. As a result, it is possible to further prevent the cooling water from being corroded and frozen.

Preferably, the fuel cell system further comprises: a power source control means for supply electric power to the secondary battery and the conductivity decrease means from the external power source during the term; wherein the power source control means stops supplying electric power to the secondary battery from the external power source when an amount of a battery charge of the secondary battery exceeds a specified value and during the term.

Accordingly, the battery charge power source, the operation power source and the device operation power source are supplied to the secondary battery, to the water pump, and to conductivity decrease means respectively via the distributor from the external power source. In addition, when an amount of the battery charge of the secondary battery exceeds the specified value, the supply of the battery charge power source to the secondary battery is stopped. Accordingly, even when the battery charge of the secondary battery is ended, the power source can be kept supplied to the water pump and conductivity decrease means. As a result, the circulation of the cooling water and the operation for removing ions can be continued.

Further, the power source for operating the water pump and the ion removing device is supplied from the external power source accordingly, it is possible to avoid a problem in which the electric power of the secondary battery is uselessly reduced as a case in which the secondary battery is a power source.

Preferably, the power source control means stops supplying electric power to the secondary battery and the conductivity decrease means from the external power source when connection of the external power source to the battery is disabled.

Accordingly, when connection of the external power source to the secondary battery is disabled, the device operation power source to conductivity decrease means is also stopped. As a result, it is possible to avoid a problem in which the electric power of the secondary battery is uselessly reduced as a case in which the secondary battery is a power source.

Still further, preferably the conductivity decrease means includes an electric ion removing device, the source control means supplies electric power to the secondary battery and the electric ion removing device from the external power source during the term.

Accordingly, the switch means is the electric ion removing device, and the switching power source is supplied to the electric ion removing device via the distributor from the external power source accordingly, the switching power source can be supplied from the external power source as a result, it is possible to avoid a problem in which the electric power of the secondary battery is uselessly reduced as a case in which the switching power source is supplied from the secondary battery.

Preferably, the conductivity decrease means includes an ion exchange resin type ion removing device interposed in a bypass pipeline bypassing the circulation pipeline and switch means for permitting or restricting a flow of the cooling water to the bypass pipeline, the power source control means supplies electric power to the secondary battery and the switch means from the external power source during the term.

Accordingly, the ion exchange resin type ion removing device and the switch means are interposed in the bypass pipeline bypassing the circulation pipeline, and the battery charge power source and the operation power source are supplied to the secondary battery and to the water pump respectively via the distributor from the external power source. In addition, when an amount of the battery charge of the second battery exceeds the specified value, the supply of the battery charge power source to the secondary battery is stopped. Accordingly, even when the battery charge of the secondary battery is ended, the operation power source can be supplied to the water pump from the external power source as a result, it is possible to avoid a problem in which the electric power of the secondary battery is uselessly reduced as a case in which the operation power source is supplied to the water pump from the secondary battery.

Preferably to the above, the switch means includes an electromotive three-way valve.

Accordingly, the switch means is the electromotive three-way valve, and the switching power source is supplied to the electromotive three-way valve via the distributor from the external power source accordingly, the switching power source can be supplied from the external power source as a result, it is possible to avoid a problem in which the electric power of the secondary battery is uselessly reduced as a case in which the switching power source is supplied from the secondary battery.

Preferably, the conductivity decrease means includes an ion exchange resin type ion removing device interposed in a bypass pipeline bypassing the circulation pipeline and switch means for permitting or restricting a flow of the cooling water to the bypass pipeline, the switch means is a three-way valve of an automatic temperature sensing type containing shape memory alloy and switches a route of the cooling water from the circulation pipeline to the bypass pipeline or from the bypass pipeline to the circulation pipeline when a temperature of the cooling water reaches a specified temperature.

Accordingly, the switch means is the electromotive three-way valve of an automatic temperature sensing type. Accordingly, the power source for operating the switch means is not necessary.

Preferably, a transportation equipment comprises: the fuel cell system according to one of the embodiments above; and an electric motor supplied with electricity at least by either one of the secondary battery and the fuel cell device to drive wheel.

Thus, in order to provide a fuel cell vehicle which prevents cooling water for cooling a fuel cell from being corroded or frozen while a secondary battery and the fuel cell are used together, the description suggests when a fuel cell device 3 is not operated, if an external power source "A" enabling a battery charge of a secondary battery 2 is connected to the secondary battery 2, a controller (pump operation control means) 22 is provided to operate a water pump 17 to circulate the cooling water via a circulation pipeline 16.

## Claims

1. Fuel cell system, comprising:
a fuel cell device (3);
a secondary battery (2) chargeable by the fuel cell device (3);
a cooling system (15) including a water pump (17) arranged to circulate cooling
water for cooling the fuel cell device (3) via a circulation pipeline (16); and
a pump operation control means (22) configured to operate the water pump (17) to circulate the cooling water via the circulation pipeline (16) during a time period when the fuel cell device (3) is not operated.

2. Fuel cell system according to claim 1, wherein the pump operation control means (22) is configured to operate the water pump (17) to circulate the cooling water via the circulation pipeline (16) during a time period when the fuel cell device (3) is not operated and when an external power source (A) is connected to the secondary battery (2) in order to charge said secondary battery (2).

3. Fuel cell system according to claim 2, wherein the pump operation control means (22) is configured to operate the water pump (17) by electric power from the external power source (A) during the aforesaid time period.

4. Fuel cell system according to claim 2 or 3, wherein the pump operation control means (22) is configured to stop operation of the water pump (17) when the connection of the external power source (A) to the secondary battery (2) is disabled.

5. Fuel cell system according to one of the claims 1 to 4, wherein during the aforesaid time period the pump operation control means (22) is configured to operate the water pump (17) with an output lower than that during operation of the fuel cell device (3).

6. Fuel cell system according to one of claims 1 to 5, wherein a conductivity decrease means (20, 31) configured to decrease conductivity of the cooling water flowing through the circulation pipeline (16) is comprised.

7. Fuel cell system according to one of claims 1 to 6, wherein a power source control means (22) configured to supply electric power to the secondary battery (2) from an external power source (A) during the aforesaid time period is provided, and, preferably, the power source control means (22) is configured to stop supplying electric power to the secondary battery (2) from the external power source (A) when an amount of a battery charge of the secondary battery (2) exceeds a specified value during the aforesaid time period.

8. Fuel cell system according to claim 7, wherein the power source control means (22) is configured to supply electric power to the secondary battery (22) and the conductivity decrease means (20, 31) from the external power source (A) during the aforesaid time period, and, preferably, the power source control means (22) is configured to stop supplying electric power to the secondary battery (2) from the external power source (A) when an amount of a battery charge of the secondary battery (2) exceeds a specified value during the aforesaid time period.

9. Fuel cell system according to claim 8, wherein the power source control means (22) is configured to stop supplying electric power to the secondary battery (2) and the conductivity decrease means (20, 31) from the external power source (A) when the connection of the external power source (A) to the secondary battery (2) is disabled.

10. Fuel cell system according to one of claims 6 to 9, wherein the conductivity decrease means (20, 31) includes an electric ion removing device (20), and, preferably, a power source control means (22) is configured to supply electric power to the secondary battery (2) and the electric ion removing device (20) from the external power source (A) during the aforesaid time period.

11. Fuel cell system according to one of claims 6 to 10, wherein the conductivity decrease means (20, 31) includes an ion exchange resin type ion removing device (31) interposed in a bypass pipeline (30) bypassing the circulation pipeline (16) and a switch means (32) configured to permit or restrict a flow of the cooling water to the bypass pipeline (30), and, preferably, a power source control means (22) is configured to supply electric power to the secondary battery (2) and the switch means (32) from the external power source (A) during the aforesaid time period.

12. Fuel cell system according to claim 11, wherein the switch means (32) includes an electromotive three-way valve.

13. Fuel cell system according to claim 11, wherein the switch means (32) is a three-way valve of an automatic temperature sensing type containing shape memory alloy and is configured to switch a route of the cooling water from the circulation pipeline (16) to the bypass pipeline (30) or from the bypass pipeline (30) to the circulation pipeline (16) when a temperature of the cooling water reaches a specified temperature.

14. Transportation equipment, in particular a vehicle, comprising the fuel cell system according to one of claims 1 to 13.

15. Transportation equipment according to claim 14, wherein an electric motor (5) is comprised, and at least either one of the secondary battery (2) and the fuel cell device (3) is configured to supply the electric motor (5) with electricity in order to drive at least one wheel (4) of the transportation equipment.
